# EUROPEAN PATENT APPLICATION

(11) **EP 2 053 807 A1**
(43) Date of publication of application: **29.04.2009**
(21) Application number: 07721301.5
(22) Date of filing: 29.05.2007
(51) Int. Cl.: H04L 12/58, H04L 29/08

(54) **A METHOD, A SYSTEM AND A TERMINAL FOR HANDLING E-MAIL NOTIFICATION**

(30) Priority: 18.08.2006 CN 200610111439
(71) Applicant: Huawei Technologies Co., Ltd., Shenzhen, Guangdong Province 518129 (CN)
(72) Inventor: WANG, Lei, Shenzhen, Guangdong 518129 (CN); YANG, Jian, Shenzhen, Guangdong 518129 (CN); CHEN, Guoqiao, Shenzhen, Guangdong 518129 (CN)
(74) Representative: Hengelhaupt, Jürgen
(86) International application number: PCT/CN2007/001728
(87) International publication number: WO 2008/022521

(57) **Abstract**

A method for handling E-Mail Notification, which relates to value-added communication technology. A terminal receives the policy for receiving EMN from user. The terminal controls the handing of EMN according to the policy. A terminal for handling E-Mail Notification, which includes: the module for setting EMN policy, which receives the policy for receiving EMN from the user, and the control module, which controls the handling of EMN according to the policy. A system for handling E-Mail Notification is also presented. The technical solutions of this invention make the equipment for handling EMN more convenient for user.

## Description

This application claims the benefit of Chinese Application No. 200610111439.7 filed on Aug.18, 2006, titled "METHOD, SYSTEM AND TERMINAL FOR RECEIVING EMAIL NOTIFICATION", which is incorporated herein by reference in its entirety.

### Field of the Invention

The present invention relates to the technical field of value-added service in communication, in particular, to a method, a system and a terminal for processing an E-Mail Notification (EMN).

### Background of the Invention

E-mail has become an important part of people's daily communication. E-mail is not only a simple message, but also an indispensable communication tool like telephone. Due to its low cost, simplicity, easiness and global compatibility, E-mail has been employed as a standard of message transfer. Therefore, it is required apparently to use such a communication tool in mobile environment, so that a user may be allowed to access an E-mail at anyplace. At present, there have been a lot of solutions for implementing mobile E-mail.

The value of providing EMN is just like providing a voice mail notification. EMN allows a mobile user to be notified when a new mail is received. By providing the characteristic of "always connected" to E-mail, the existing Internet E-mail may be combined with the characteristic of notification, thus a service with added values may be established for a terminal user.

The main object of EMN is to invoke related device to start an E-mail client. The E-mail client may receive an E-mail, so that the E-mail server may be allowed to send a notification in a standard mode, without considering the implementation of various different E-mail clients. The added value of the designated notification mechanism lies in that a user may be processed transparently via an E-mail client. For example, an E-mail may be received before the user is notified, so that the E-mail may be browsed directly.

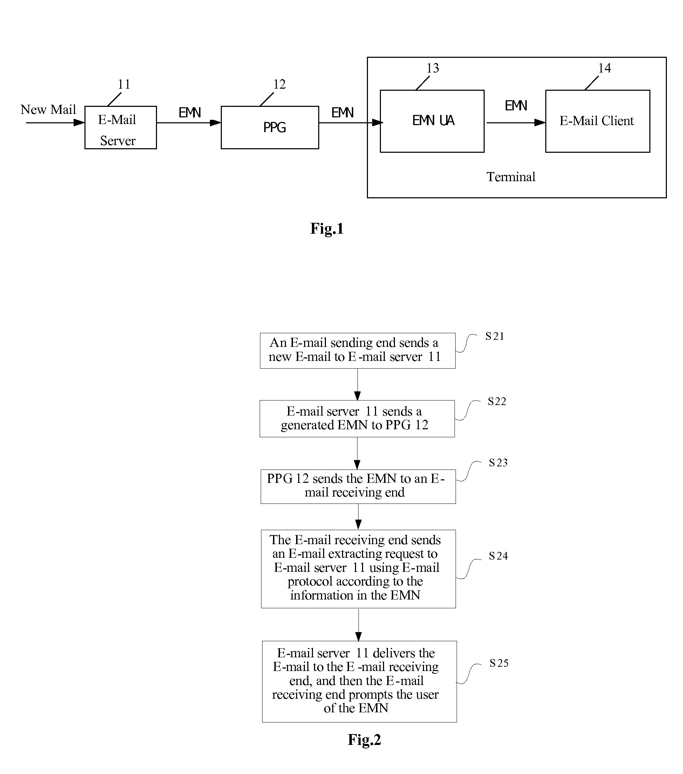

An existing mail notification solution uses a Push architecture. Referring to Figure 1, it is a schematic diagram of an EMN Push architecture of the prior art. When a new mail arrives, E-mail server 11, which acts as a PI (Push Initiator), may generate an E-Mail Notification (EMN) and send it to Push Proxy Gateway (PPG) 12. PPG 12 pushes the EMN to EMN User Agent (EMN UA) 13 (logically, the EMN UA is separated from the E-mail client, but in fact, they may be integrated and configured in a terminal). EMN UA 13 resolves the content of the EMN, and then notifies E-mail client 14 of the EMN, in other word, it notifies the E-mail client to extract the E-mail on E-mail server 11. After the E-mail reaches E-mail client 14, the user may be notified of the EMN.

As shown in Figure 2, it is a flow chart of an existing method for processing an EMN with the Push architecture illustrated in Figure 1.

S21: An E-mail sender sends a new E-mail to E-mail server 11.

S22: E-mail server 11 sends a generated EMN to PPG 12.

S23: PPG 12 sends the EMN to an E-mail receiver, in other words, to a terminal (including EMN UA 13 and E-mail client 14).

S24: The E-mail receiver sends an E-mail extracting request to E-mail server 11 using E-mail protocol according to the information in the EMN.

S25: E-mail server 11 delivers the E-mail to the E-mail receiver, and then the E-mail receiver notifies the user of the EMN.

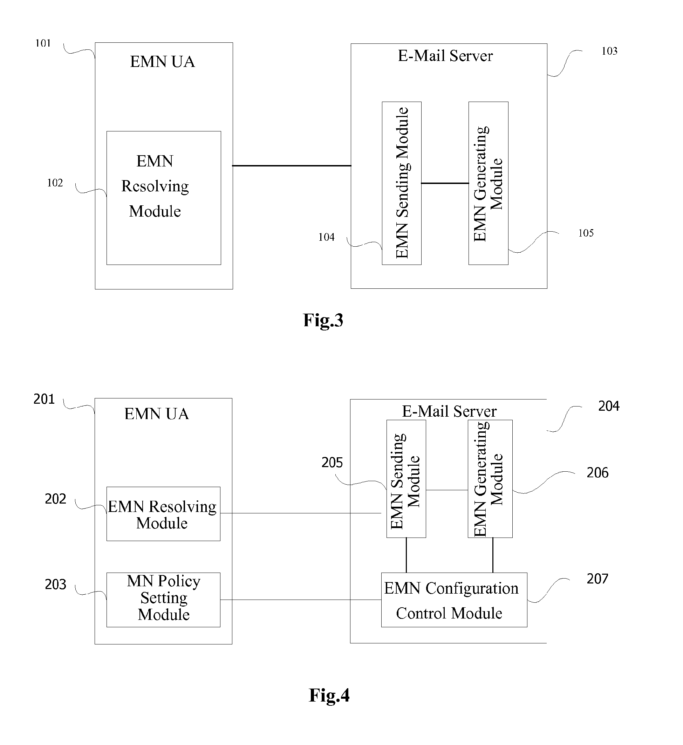

Figure 3 is a structural diagram of each functional module directly related to an EMN in the prior art. EMN UA 101 includes EMN resolving module 102. E-mail server 103 includes EMN sending module 104 and EMN generating module 105. EMN generating module 105 is used for generating an EMN and sending the generated EMN to EMN sending module 104, and EMN sending module 104 is used for sending the generated EMN to EMN resolving module 102.

The existing EMN carries a URI (Uniform Resource Identifier) of a mailbox with a new mail in a message. The mailbox URI is used for designating a mail account. The time attribute of the EMN may ensure the client to identify which mail notification is the latest.

During the implementation of the present invention, the inventor finds that the prior art has at least the following problem. At present, a user usually has several mailbox accounts, such as an enterprise mailbox for dealing with working affairs during working time and a personal mailbox for dealing with personal affairs during off hours. Hence, by employing the above existing method for processing an EMN, neither of the E-mail server and the terminal can particularly meet the requirement of the user on device humanization.

For example, by employing the above existing method for processing an EMN, a user may see a new mail prompt given by the terminal as soon as the mail server receives a new mail sent to a mailbox (including enterprise mailbox and personal mailbox) of the user. Thus, the user may see a number of new mail prompts related to personal affairs in working time, and a number of new mail prompts related to working affairs in off hours. But in fact, in working time, many users only have time to deal with mails related to their work, and they do not have time to deal with personal mails; while in off hours, they usually do not want to know that a mail related to non-important work arrives.

In another example, according to the existing method for processing an EMN, the terminal will extract a new mail from the E-mail server as soon as the E-mail server receives the mail. If a number of new mails reach the E-mail server at the same time and the terminal is running other important programs of the user at this moment, the terminal must occupy a great amount of bandwidth resources to extract the mails. As a result, the speed of the important programs which are running may be lowered.

### Summary of the Invention

The embodiments of the present invention provide a method, a system and a terminal for processing an EMN, wherein, an EMN may be processed according to the requirements of a user, so that the degree of humanization of an EMN processing device may be improved.

One embodiment of the present invention provides a method for processing an EMN, including: obtaining, by a terminal, an EMN policy of a user; and controlling, by the terminal, the processing of the EMN according to the EMN policy.

One embodiment of the present invention further provides a system for processing an EMN, including: a terminal and an E-mail server, and the terminal includes an EMN policy setting module adapted to obtain the EMN policy of a user. The system further includes a first EMN configuration control module adapted to control at least one E-mail server to process the EMN according to the EMN policy provided by the EMN policy setting module.

One embodiment of the present invention further provides a terminal for processing an EMN, including: an EMN policy setting module, adapted to obtain the EMN policy of a user; and an EMN control processing module, adapted to control a processing to the EMN according to the EMN policy.

One embodiment of the present invention further provides a system for processing an EMN, including a terminal and an E-mail server adapted to send an EMN to the terminal, wherein the terminal includes: an EMN policy setting module adapted to obtain the EMN policy of a user; and an EMN control processing module adapted to control a processing to the EMN from the E-mail server according to the EMN policy.

In the embodiments of the present invention, upon obtaining an EMN policy of a user, the EMN may be processed according to the EMN policy of the user, so that the flexibility of processing the EMN by a terminal may be improved. As a result, the communication tool of E-mail can meet the requirement of humanization.

### Brief Description of the Drawings

Figure 1 is a schematic diagram of an EMN Push architecture of the prior art;

Figure 2 is a flow chart of the Push architecture of the prior art;

Figure 3 is a structural diagram related to an EMN of the prior art;

Figure 4 is a structural diagram of a system including an EMN UA and an E-mail server according to Embodiment 1 of the present invention;

Figure 5 is a flow chart of a method for processing an EMN under the structure shown in Figure 4 according to Embodiment 1 of the present invention;

Figure 6 is a schematic diagram of an EMN setting request message according to Embodiment 1 of the present invention;

Figure 7 is a schematic diagram of an EMN setting request response message according to Embodiment 1 of the present invention;

Figure 8 is a structural diagram of a system including an EMN UA and an E-mail server according to Embodiment 2 of the present invention;

Figure 9 is a flow chart of a method for processing an EMN under the structure shown in Figure 8 according to Embodiment 2 of the present invention; and

Figure 10 is a structural diagram of a terminal according to one embodiment of the present invention.

### Detailed Description of the Embodiments

The embodiments of the present invention will now be further illustrated in conjunction with the drawings.

Referring to Figure 4, it is a structural diagram of a system which includes EMN UA 201 and E-mail server 204 according to Embodiment 1 of the present invention. EMN UA 201 not only includes EMN resolving module 202, but also includes EMN policy setting module 203; E-mail server 204 not only includes EMN sending module 205 and EMN generating module 206, but also includes EMN configuration control module 207. The above modules in Embodiment 1 will now be described in detail.

EMN policy setting module 203 provides an operation interface for a user to set an EMN policy (particularly, a menu may be provided to a user), and an EMN setting request message may be generated according to the EMN policy set by the user. Additionally, if the E-mail server responds to the EMN setting request message, EMN policy setting module 203 may also resolve the response message to the EMN setting request of the server as required, so as to notify the user of the setting result. The result may be notified in various ways, for example, using tools such as trumpet, display and the like, employing sound, icon, animation and any combination thereof.

EMN configuration control module 207 can resolve the EMN setting request message sent by an EMN UA, and determine whether a setting rule in the EMN setting request message can be accepted (or, the function may not be provided and a setting rule in the default EMN setting request message is acceptable). EMN configuration control module 207 can control the content of an EMN generated by EMN generating module 206 and/or control the time when EMN sending module 205 sends an EMN according to the EMN setting request message sent by the EMN UA 201, for the mailbox accounts corresponding to the EMN setting request. Specifically, EMN configuration control module 207 may include an EMN content configuration control module and an EMN sending configuration control module. The EMN content configuration control module is adapted to control the content of an EMN generated by EMN generating module 206 in an E-mail server, according to the EMN policy provided by EMN policy setting module 203, and the EMN sending configuration control module is adapted to control the time when EMN sending module 205 in the E-mail server sends an EMN, according to the EMN policy provided by EMN policy setting module 203.

It should be noted that EMN configuration control module 207 may also exist independently, rather than being set in an E-mail server. Thus, EMN configuration control module 207 is adapted to control EMN sending modules 205 and EMN generating modules 206 in several E-mail servers. In such a case, a user may use one EMN setting request message to set different accounts on different servers. In this condition, the user sends an EMN setting request message to EMN configuration control module 207, and EMN configuration control module 207 sends the message to different E-mail servers after resolving it, and controls different EMN sending modules and EMN generating modules to process different accounts.

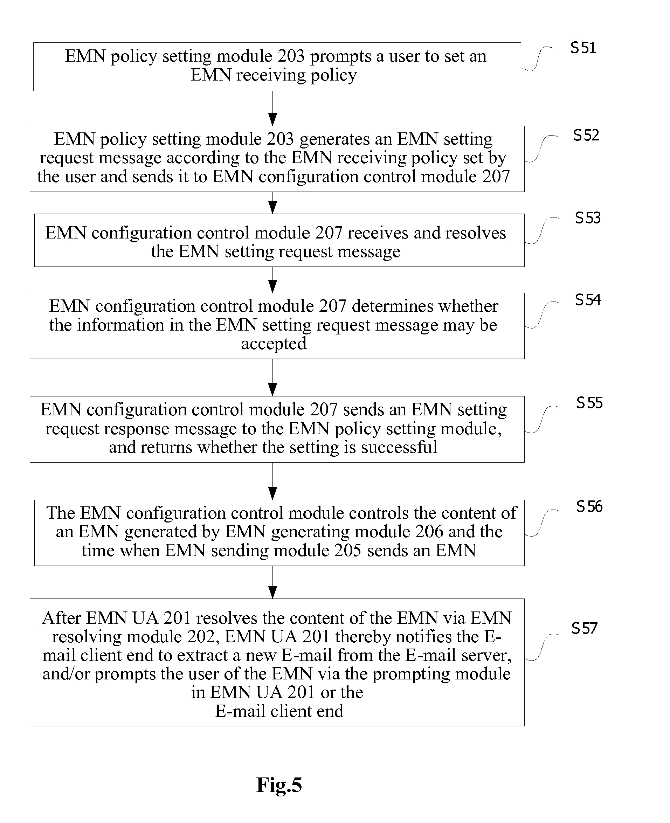

Referring to Figure 5, it is a flow chart of a method for processing an EMN under the structure shown in Figure 4 according to Embodiment 1 of the present invention, including:

S51: EMN policy setting module 203 notifies a user to set an EMN policy;

S52: EMN policy setting module 203 generates an EMN setting request message according to the EMN policy set by the user and sends the EMN setting request messageto EMN configuration control module 207;

S53: EMN configuration control module 207 receives and resolves the EMN setting request message;

S54: EMN configuration control module 207 determines whether the information in the EMN setting request message is accepted;

S55: EMN configuration control module 207 sends an EMN setting request response message to the EMN policy setting module, and responses whether the setting is successful;

S56: If the setting is successful, the EMN configuration control module will control the content of an EMN generated by EMN generating module 206 and the time when EMN sending module 205 sends an EMN, according to the EMN policy resolved from the EMN setting request message;

S57: after EMN UA 201 resolves the content of the EMN via EMN resolving module 202, EMN UA 201 thereby notifies the E-mail client to extract a new E-mail from the E-mail server, and/or notifies the user of the EMN via the prompting module set in EMN UA 201 or the E-mail client. It should be noted that, logically, the prompting module which notifies the user of the EMN may also be regarded as independent of EMN UA 201 and the E-mail client, but the prompting module needs to intercommunicate with EMN UA 201 and/or the E-mail client.

It may be seen from the above blocks S51 to S57 that in this embodiment, the terminal including EMN UA 201 controls the content of an EMN generated by the E-mail server and/or the time when sending the EMN according to the EMN policy of the user obtained by EMN policy setting module 203, so that the new E-mail may be extracted according to the requirements of the user or the user may be notified of the EMN.

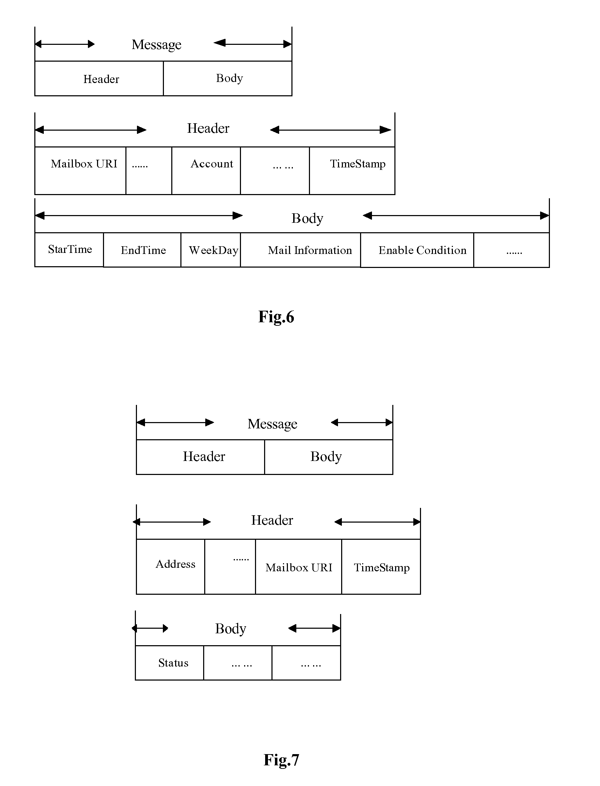

Referring to Figure 6, it is a schematic diagram of an EMN setting request message according to Embodiment 1 of the present invention. The EMN setting request message in this embodiment includes a Header and a Body.

The Header mainly includes the following contents:

1) the address of a mail server (or a server on which the module corresponding to an EMN exists) (not shown);

2) TimeStamp (herein, TimeStamp should be the time on the user; on one hand, the mail server may determine the latest EMN setting request message by a TimeStamp; and on the other hand, when the time on the user is asynchronous to the time on the mail server, the time difference may be determined by comparing the time of the TimeStamp with the time on the mail server);

3) Mailbox account (Account) and information adapted to uniquely identify the mailbox account (such as Mailbox URI).

In addition, the Header may also include mailbox account authentication information (for right verification on the mail server).

The Body mainly includes an EMN setting rule, and the EMN setting rule may include several contents, such as a schedule containing the time when allowed to be sent (StartTime and End Time), information which is allowed to be carried in an EMN in a corresponding time, the type of EMN which is allowed to be received, mail information enable condition, etc. The EMN setting rule may also include the address of an E-mail sender rejected by the EMN UA; thus, when the E-mail server receives an E-mail sent from the address, the E-mail server may automatically delete and mask the E-mail. It should be noted that contents in the Body are independent to each other and at least one of the contents may be set independently.

In practice, there may be various ways for a user to set the EMN policy of a mailbox account using an EMN setting request message. The followings are only several examples.

(1) A user sets a mailbox account on an E-mail server using a message, as shown in Table 1:

**Table 1**

| Mailbox URI | Account | TimeStamp | StarTime | EndTime | WeekDay | MailInformation | EnableCondition |
|---|---|---|---|---|---|---|---|
| mailbox="pop:// zhangsan;auth =3598302@life .com" | zhangsan @life.com | 2006-08-12 T22:45:00Z | | | | Subject | ALL |
| | | | 10:00 | 20:00 | 6*7 | Subject*From | Onlylnstancy |

(2) The user sets different accounts on the same E-mail server using a message, as shown in Table 2:

**Table 2**

| Mailbox URI | Account | TimeStamp | StarTime | EndTime | WeekDay | MailInformation | EnableCondition |
|---|---|---|---|---|---|---|---|
| mailbox="pop:// zhangsan1;auth =3598302@ life.com" | zhangsan1 @life.com | 2006-08-12 T22:45:00Z | 19:00 | 22:00 | 1*2*3*4*5 | Subject | ALL |
| | | | 10:00 | 20:00 | 6*7 | Subject*From | Onlylnstancy |
| mailbox="pop:// zhangsan2;auth =3598302@ life.com" | zhangsan2 @life.com | 2006-08-12 T22:45:01Z | 19:00 | 22:00 | 1*2*3*4*5 | Subject | ALL |
| | | | 10:00 | 20:00 | 6*7 | Subject*From | Onlylnstancy |

(3) The user sets several mailbox accounts (which may be on the same mail server or on different E-mail servers) using a plurality of messages, for example:

Table 3 shows how to set different accounts on the same E-mail server "life.com" using a plurality of messages.

**Table 3**

| Mailbox URI | Account | TimeStamp | StarTime | EndTime | WeekDay | MailInformation | EnableCondition |
|---|---|---|---|---|---|---|---|
| mailbox="pop:// zhangsan1;auth= 3598302@ life.com" | Zhangsa n1@life. com | 2006-08-12 T22:45:00Z | 19:00 | 22:00 | 1*2*3*4* 5 | Subject | ALL |
| | | | 10:00 | 20:00 | 6*7 | | Onlylnstancy |
| mailbox="pop:// zhangsan2;auth= 3598302@ life.com" | Zhangsa n2@life. com | 2006-08-12 T22:45:00 Z | 19:00 | 22:00 | 1*2*3*4* 5 | Subject | ALL |
| | | | 10:00 | 20:00 | 6*7 | Subject*From | Onlylnstancy |

Table 4 shows how to set different accounts on different E-mail servers "life.com" and "work.com" using a plurality of messages.

**Table 4**

| Mailbox URI | Account | TimeStamp | StarTime | EndTime | WeekDay | MailInformation | EnableCondition |
|---|---|---|---|---|---|---|---|
| mailbox="pop:// zhangsan;auth= 3598302@ life.com" | Zhangsa n@life.c om | 2006-08-12 T22:45:00 Z | 19:00 | 22:00 | 1*2*3*4* 5 | Subject | ALL |
| | | | 10:00 | 20:00 | 6*7 | Subject*From | Onlylnstancy |
| | | | | | | | |

| Mailbox URI | Account | TimeStamp | StarTime | EndTime | WeekDay | MailInformation | EnableCondition |
|---|---|---|---|---|---|---|---|
| mailbox="pop:// zhangsan2;auth= 3598302@ work.com | Zhangsa n2@wor k.com | 2006-08-12 T22:45:00 Z | 19:00 | 22:00 | 1*2*3*4* 5 | Subject | ALL |
| | | | 10:00 | 20:00 | 6*7 | Subject*From | Onlylnstancy |

Because after EMN policy setting module 203 sends an EMN setting request message to EMN configuration control module 207, EMN configuration control module 207 may send an EMN setting request response message to EMN policy setting module 203, the contents related to the EMN setting request response message will now be described briefly. Referring to Figure 7, it is a schematic diagram of an EMN setting request response message according to Embodiment 1 of the present invention. The EMN setting request response message also includes a Header and a Body.

The Header may include the following contents: address adapted to find the terminal in which the EMN UA exists; information adapted to identify a mailbox account (such as Mailbox URI); and a TimeStamp (the time on the mail server, adapted to assure that the message is the latest).

The Body may include a Status Code (which indicates the setting result of Successful/Failed, etc.).

The receiving process for an EMN will now be described in a detailed example.

A user has two mailboxes, a working mailbox: zhangsan@work.com, and a personal mailbox: zhangsan@life.com. The EMN policy of the user is as follows:

During 9: 00-18: 00 from Monday to Friday: all the EMNs from the working mailbox will be receive, and the contents of the EMN include mail subject and addresser; no EMN from the personal mailbox will be received in this period;

During 19: 00-22: 00 from Monday to Friday: all the EMNs from the personal mailbox will be received, and only the EMN of an urgent Email from the working mailbox will be received, wherein the contents of the EMNs all include the mail subject;

During 10: 00-20: 00 from Saturday and Sunday: the EMN of an urgent Email from the personal mailbox will be received, and the contents of the EMN include mail subject and addresser; no EMN from the working mailbox will be received;

The other time is rest time, and no EMN will be received.

After the user sets the above EMN policy in the menu, EMN policy setting module 203 generates an EMN setting request message for each of the two mailboxes according to the EMN policy set by the user, and sends the EMN setting request message to corresponding Email server.

The EMN setting request message is as follows.

The EMN setting message sent to the mail server corresponding to zhansan@work.com is shown in Table 5.

**Table 5**

| Mailbox URI | Account | TimeStamp | StarTime | EndTime | WeekDay | MailInformation | EnableCondition |
|---|---|---|---|---|---|---|---|
| mailbox="pop:// zhangsan;auth =3598302@ work.com" | zhangsa n @work. com | 2006-08-12 T22:45:00Z | 9:00 | 18:00 | 1*2*3*4*5 | Subject*From | ALL |
| | | | 19:00 | 22:00 | 1*2*3*4*5 | Subject | Onlylnstancy |

The EMN setting message sent to the mail server corresponding to zhangsan@life.com is shown in Table 6.

**Table 6**

| Mailbox URI | UserName | TimeStamp | StarTime | EndTime | WeekDay | MailInformation | EnableCondition |
|---|---|---|---|---|---|---|---|
| mailbox="pop:// zhangsan;auth =3598302@ life.com" | zhangsan@ life.com | 2006-08-12 T22:45:00Z | 19:00 | 22:00 | 1*2*3*4* 5 | Subject | ALL |
| | | | 10:00 | 20:00 | 6*7 | Subject*From | Onlylnstancy |

The two mail servers both receive corresponding EMN setting request message, and the contents of the messages are resolved by an EMN configuration control module. If the EMN policy setting modules in the two mail servers both determine that the setting is successful, then corresponding EMN setting request response message will be returned respectively.

The EMN setting request response message returned by the server corresponding to the working mail is shown in Table 7.

**Table 7**

| Address | Mailbox URI | TimeStamp | Status |
|---|---|---|---|
| 139101***** | zhangsan@work.com | 2006-08-12 T23:15:00Z | Succeed |

The EMN setting request response message returned by the server corresponding to the personal mail is shown in Table 8.

**Table 8**

| Address | Mailbox URI | TimeStamp | Status |
|---|---|---|---|
| 139101***** | zhangsan@life.com | 2006-08-12 T23:15:00Z | Succeed |

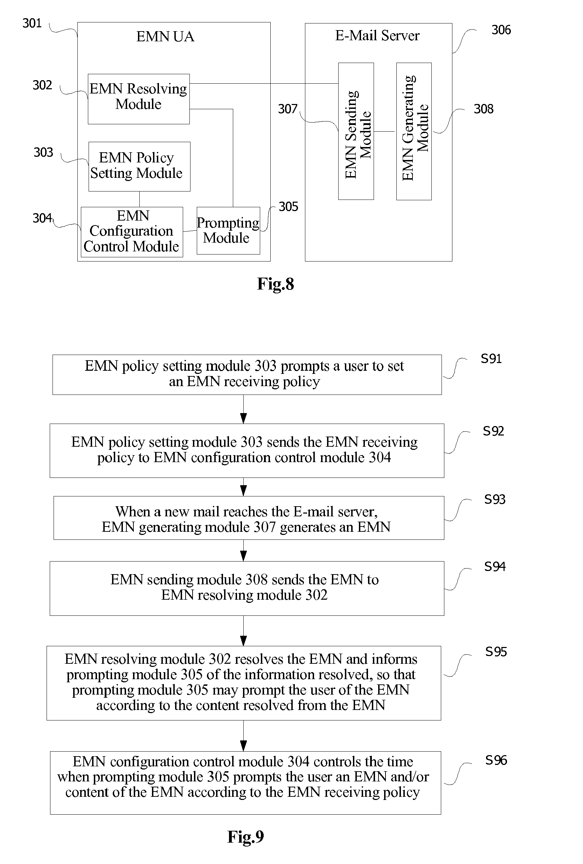

Referring to Figure 8, it is a structural diagram of a system which includes EMN UA 301 and E-mail server 306 according to Embodiment 2 of the present invention. In Embodiment 2, EMN UA 301 not only includes EMN resolving module 302 and EMN policy setting module 303, but also includes EMN configuration control module 304 and prompting module 305. E-mail server 306 includes EMN sending module 307 and EMN generating module 308. It should be noted that prompting module 305 may not only be set in an EMN UA, but also may be set in an E-mail client. Logically, it may be regarded as independent of the EMN UA and the E-mail client.

Referring to Figure 9, it is a flow chart of a method for processing an EMN under the structure shown in Figure 8 according to Embodiment 2 of the present invention.

S91: EMN policy setting module 303 notifies a user to set an EMN policy;

S92: EMN policy setting module 303 sends the EMN policy to EMN configuration control module 304;

S93: when a new mail reaches the E-mail server, EMN generating module 307 generates an EMN;

S94: EMN sending module 308 sends the EMN to EMN resolving module 302;

S95: EMN resolving module 302 resolves the EMN and informs prompting module 305 of the resolved information, so that prompting module 305 may notify the user of the EMN according to the content resolved from the EMN;

S96: EMN configuration control module 304 controls the time when prompting module 305 notify the user of an EMN and /or the content of the EMN according to the EMN policy.

As mentioned above, the terminal logically includes an EMN UA and an E-mail client. Therefore, the prompting module may be set on various locations in the terminal, which will be described below respectively.

(1) If prompting module 305 is set in EMN UA 301 (as shown in Figure 8), the prompt notified by prompting module 305 is usually directed to the arrival of an EMN, and the user will be requested in the prompt content to indicate whether to extract an E-mail. If the user indicates to extract an E-mail after seeing the prompt content, prompting module 305 will continue to notify the E-mail client of the EMN, in other words, to notify the E-mail client to extract a new E-mail from the E-mail server; if the user indicates not to extract an E-mail after seeing the prompt content, prompting module 305 will cease notifying the E-mail client to extract a new E-mail from the E-mail server. For such a case, after an EMN reaches EMN UA 301, EMN configuration control module 304 may control the time when prompting module 305 notify the user and /or the content of the EMN according to the EMN policy provided by EMN policy setting module 303.

Because EMN configuration control module 304 may control the time when prompting module 305 notifies the user of the EMN, and prompting module 305 may only notify the E-mail client to extract an E-mail from the E-mail server after prompting module 305 gives a user prompt, in such a case, EMN configuration control module 304 not only directly controls the time when prompting module 305 notifies an EMN and/or content of the EMN, but also controls the time when EMN UA 301 notifies the E-mail client of the EMN. Therefore, the E-mail client may be controlled to extract a new E-mail from the E-mail server.

(2) If the prompting module is set in an E-mail client, the prompt given to a user by the prompting module is usually directed to the extraction of a new E-mail by a terminal. After the EMN UA receives the EMN and resolves the content of the EMN, the EMN UA will notify the E-mail client in time to extract a new E-mail from the E-mail server. After the E-mail client extracts the corresponding new E-mail, the EMN configuration control module will directly control the time when prompting module notifies the user an EMN and/or content of the EMN according to the EMN policy provided by the EMN policy setting module.

In conclusion, the EMN configuration control module may directly control the time and/or the content of the EMN which is provided to the user according to the EMN policy provided by the user, and it may also control the terminal to extract a new E-mail by controlling the time to notify the E-mail client of the EMN by the EMN UA.

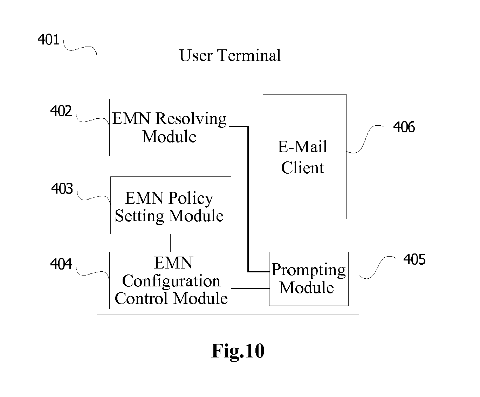

Referring to Figure 10, it is a structural diagram of a terminal according to one embodiment of the present invention. In this embodiment, terminal 401 includes EMN resolving module 402, EMN policy setting module 403, and an EMN control processing module which includes EMN configuration control module 404 and prompting module 405. In addition, terminal 401 further includes E-mail client 406.

EMN resolving module 402 is adapted to resolve an EMN from an E-mail server. EMN policy setting module 403 is adapted to obtain the EMN policy of a user. The EMN control processing module is adapted to control a processing of an EMN according to the EMN policy provided by EMN policy setting module 403. The EMN control processing module specifically includes EMN configuration control module 404 and prompting module 405, wherein: prompting module 405 is adapted to prompt a user of the EMN according to the content resolved from an EMN provided by EMN resolving module 402; and EMN configuration control module 404 is adapted to control prompting module 405 to notify the user of the EMN according to the EMN policy provided by EMN policy setting module 403.

The processes in which the EMN configuration control module controls the prompting module to notify the user of the EMN when the prompting module is set in different locations have been described above in detail, and repeated explanations thereof will be omitted. Now, the internal structure will be further described in conjunction with the operating principle to process an EMN by a terminal shown in Figure 10.

After the terminal obtains the EMN policy of a user via EMN policy setting module 403, the terminal informs EMN configuration control module 404 of the EMN policy. Thus, when the terminal receives an EMN from an E-mail server, the terminal first resolves the content of the EMN via EMN resolving module 402, and then informs prompting module 405 of the content of the EMN, thereby prompting module 405 may notify the user of the EMN under the control of EMN configuration control module 404.

It may be seen from the embodiments of the present invention that the terminal may be indirectly controlled to notify the user of the EMN by controlling the content of an EMN generated by the E-mail server and the time to send the EMN according to the EMN policy, so that the E-mail server and the terminal may further meet the humanization requirements laid by the user. In alternative, no modification is made to the E-mail server, and the terminal can be directly or indirectly controlled to notify the user of the time when notifying an EMN and/or content of the EMN according to the EMN policy of the user. Therefore, the degree of humanization of the terminal may be improved.

Additionally, there are other embodiments. For example, one of the two attributes, i.e., the time for prompting EMN and the content of the EMN, may be controlled on a terminal locally, and the process is similar to Embodiment 2; while the other attribute is controlled in an interactive setting mode of the terminal and the E-mail server, and the process is similar to Embodiment 1. However, it is possible that only one of the two attributes, i.e., the time for prompting EMN and content of the EMN is controlled while the other is not controlled. For example, only the EMN prompting time on a terminal is controlled locally while the content of the EMN will not be controlled.

It may be seen from the above embodiments of the present invention, by obtaining the EMN policy of a user, the terminal may control the processing of an EMN according to the EMN policy; for example, the terminal may control the time when E-mail server generate an EMN and/or content of the EMN, or may control the terminal to extract a new E-mail from the E-mail server, or may control the terminal to prompt the user of the EMN. Thus, the user may control the terminal, and the terminal controls the EMN, so that the passive EMN processing mode of the prior art, in which the new mail controls the EMN, the EMN controls the terminal and the terminal controls the user, may be modified. As a result, the flexibility of the terminal to process an EMN may be improved, and devices such as terminal and so on may further meet the requirements of humanization.

For example, by employing the technical solution according to embodiments of the present invention, a terminal may prompt an EMN in the way required by a user. Thus, the user may only see a new mail prompt related to working affairs during working time, and no new mail prompt related to personal affairs will be seen.

In another example, by employing the embodiments of the present invention, a terminal may be controlled to extract an E-mail from an E-mail server as required by the user, so that when the user does not want to receive a new mail, the terminal will not extract a new mail even if the mail reaches the E-mail server. Thus, the bandwidth resources between the terminal and the server will be used more reasonably, and a better service may be provided to the user.

In addition, it should be noted that in the embodiments of the present invention, the terminal for obtaining the EMN policy of the user and the terminal which controls the processing of the EMN according to the EMN policy may be the same executive subject, or may be different executive subjects.

In the case of the same executive subject, the executive subject may be a terminal that receives and processes an EMN directly from an E-mail server, or it may also be a terminal that does not receive an EMN directly. For the latter, it is mainly directed to the embodiments in which a mail server is controlled to process an EMN according to the EMN policy; for example, the executive subject for receiving the EMN policy set by a user and controlling the E-mail server to process an EMN is a computer used by the user, while the executive subject for actually receiving an EMN from the E-mail server and prompting the user of the EMN is a mobile phone used by the user. In such a case, the mobile phone used by the user may employ a conventional mobile phone, and no modification will be made. All of the modifications provided in the embodiments of the present invention will be implemented on the computer.

In the case of different executive subjects, it is mainly directed to the embodiments in which the E-mail server does not need to be modified. For example, the terminal that obtains the EMN policy of the user is a computer, while the terminal processing an EMN from an E-mail server according to the EMN policy is a mobile phone used by the user. In such a case, the related technology for obtaining the EMN policy of a user is implemented on the computer. Then, the computer sends the EMN policy to the mobile phone of the user. Thus, the mobile phone may process the EMN from the E-mail server according to the EMN policy (in other words, the related technology for controlling processing to an EMN according to the EMN policy is implemented on the mobile phone).

Thus it may be seen that no matter whether the terminal which obtains the EMN policy of a user and the terminal which controls the processing to the EMN according to the EMN policy are the same executive subject, and no matter whether the executive subject is a terminal that directly receives an EMN from the E-mail server or an independent control terminal (which is not a terminal that directly receives an EMN from an E-mail server) when they are the same executive subject, the requirements of the user may be met better.

Additional advantages and modifications will readily occur to those skilled in the art. Therefore, the present invention in its broader aspects is not limited to the specific details and representative embodiments shown and described herein. Accordingly, various modifications and variations may be made without departing from the spirit or scope of the present invention as defined by the appended claims and their equivalents.

## Claims

1. A method for processing an E-Mail Notification, EMN, comprising:
obtaining, by a terminal, an EMN receiving policy of a user; and
controlling, by the terminal, the processing of the EMN according to the receiving policy.

2. The method according to claim 1, wherein the controlling, by the terminal, the processing of an EMN according to the receiving policy comprises:
controlling, by the terminal, an E-mail server to process the EMN according to the receiving policy.

3. The method according to claim 2, wherein the controlling, by the terminal, the E-mail server to process the EMN according to the receiving policy comprises:
sending, by the terminal, the receiving policy to the E-mail server; and
generating, by the E-mail server, the EMN and/or sending the EMN to the terminal according to the receiving policy.

4. The method according to any of claims 1 to 3, wherein the controlling, by the terminal, the processing of the EMN according to the receiving policy comprises:
processing, by the terminal, the EMN according to the receiving policy.

5. The method according to claim 4, wherein the terminal comprises an EMN user agent and an E-mail client, and the processing, by the terminal, the EMN according to the according to the receiving policy comprises:
after resolving the EMN from the E-mail server, controlling, by the EMN user agent, a time when notifying the E-mail client of the EMN according to the receiving policy.

6. The method according to claim 4, wherein the processing, by the terminal, the EMN according to the receiving policy comprises:
after resolving the EMN from the E-mail server, controlling, by the terminal, a time when notifying the user of the EMN and/or a content of the EMN.

7. The method according to claim 6, wherein the terminal comprises an EMN user agent and an E-mail client, and controlling, by the terminal, a time when notifying the user of the EMN and/or a content of the EMN after the terminal resolving the EMN from the E-mail server comprises:
after the EMN user agent resolving the EMN from the E-mail server, controlling, by the EMN user agent, the time when notifying the user of the EMN and/or the content of the EMN; or
after the EMN user agent resolving the EMN from the E-mail server, notifying, by the EMN user agent, the E-mail client of the EMN; and after the E-mail client extracting an E-mail from the E-mail server, controlling, by the E-mail client, the time when notifying the user of the EMN and/or the content of the EMN.

8. The method according to any of claims 1 to 3, wherein the EMN receiving policy comprises a content of the EMN required by a user and/or a time when receiving the EMN.

9. The method according to claim 8, wherein the EMN receiving policy further comprises an address of an E-mail sender rejected by the user.

10. The method according to any of claims 1 to 3, wherein the terminal which obtains the EMN receiving policy of the user and the terminal which controls the processing of the EMN according to the receiving policy are the same executive subject, or different executive subjects.

11. A system for processing an E-Mail Notification, EMN, comprising a terminal and an E-mail server, wherein:
the terminal comprises an EMN policy setting module adapted to obtain an EMN receiving policy of a user; and
the system further comprises a first EMN configuration control module adapted to control at least one E-mail server to process the EMN according to the EMN receiving policy provided by the EMN policy setting module.

12. The system according to claim 11, wherein the E-mail server comprises: an EMN generating module adapted to generate the EMN when a new mail arrives, and an EMN sending module adapted to send the EMN to the terminal; wherein the first EMN configuration control module comprises:
an EMN content configuration control module adapted to control a content of the EMN generated by the EMN generating module in at least one E-mail server, according to the EMN receiving policy provided by the EMN policy setting module;
and/or
an EMN sending configuration control module adapted to control a time when the EMN sending module in at least one E-mail server sends the EMN, according to the EMN receiving policy provided by the EMN policy setting module.

13. The system according to claim 11, wherein the terminal further comprises:
an EMN resolving module adapted to resolve the EMN from an E-mail server;
a prompting module adapted to notify the user of the EMN according to the content of the EMN provided by the EMN resolving module; and
a second EMN configuration control module adapted to control a time when the prompting module notify the user of the EMN and/or the content of the EMN, according to the EMN receiving policy provided by the EMN policy setting module.

14. The system according to any of claims 11 to 13, wherein the EMN receiving policy comprises the content of the EMN required by the user and/or a time when receiving the EMN.

15. The system according to any of claims 11 to 13, wherein the first EMN configuration control module lies inside or outside the E-mail server.

16. A terminal for processing an E-Mail Notification, EMN, comprising:
an EMN policy setting module adapted to obtain an EMN receiving policy of a user; and
an EMN control processing module adapted to control a processing of an EMN according to the EMN receiving policy.

17. The terminal according to claim 16, wherein the terminal further comprises an EMN resolving module adapted to resolve the EMN from an E-mail server, and the EMN control processing module comprises an electronic EMN configuration control module and a prompting module, wherein:
the prompting module is adapted to notify the user of the EMN according to an content of the EMN provided by the EMN resolving module; and
the EMN configuration control module is adapted to control a time when the prompting module notify the user of the EMN and/or the content of the EMN, according to the EMN receiving policy provided by the EMN policy setting module.

18. The terminal according to claim 17, wherein the EMN policy setting module, the EMN configuration control module and the prompting module are all set in an EMN user agent of the user;
or,
the EMN policy setting module and the EMN configuration control module are set in the EMN user agent of the user, and the prompting module is set in an E-mail client of the terminal.

19. The terminal according to any of claims 16 to 18, wherein the EMN receiving policy comprises a content of the EMN required by the user and/or a time when receiving the EMN.

20. A system for processing an E-Mail Notification, EMN, comprising a terminal and an E-mail server adapted to send the EMN to the terminal, wherein the terminal comprises:
an EMN policy setting module adapted to obtain an EMN receiving policy of a user; and
an EMN control processing module adapted to control the processing of the EMN from the E-mail server according to the EMN receiving policy.

21. The system according to claim 20, wherein the terminal further comprises an EMN resolving module adapted to resolve the EMN from the E-mail server, and the EMN control processing module comprises an electronic EMN configuration control module and a prompting module, wherein:
the prompting module is adapted to notify the user of the EMN according to an content of the EMN provided by the EMN resolving module; and
the EMN configuration control module is adapted to control a time when the prompting module notify the user of the EMN and/or the content of the EMN, according to the EMN receiving policy provided by the EMN policy setting module.
